# EUROPEAN PATENT SPECIFICATION

(11) **EP 0 837 042 B1**
(45) Date of publication and mention of the grant of the patent: **22.09.1999**
(21) Application number: 97117961.9
(22) Date of filing: 16.10.1997
(51) Int. Cl.: C03B 33/037

(54) **Controlled machine for cutting glass sheets along predetermined lines**
Gesteuerte Maschine zum Schneiden von Glastafeln nach vorgeschriebenen Linien
Machine à commande pour découper des feuilles de verre selon des lignes prédéterminées

(30) Priority: 21.10.1996 IT TO960857
(43) Date of publication of application: 22.04.1998
(73) Proprietor: BOTTERO S.p.A., 12100 Cuneo (IT)
(72) Inventor: Aimar, Giacomo, 12010 Cervasca (IT); Guarguagli, Marco, 12100 Cuneo (IT); Bertolino, Valerio, 12040 Morozzo (IT)
(74) Representative: Cerbaro, Elena, Dr.

(56) References cited:
- EP-A- 0 503 647
- IT-B- 1 241 281
- US-A- 3 506 172

## Description

The present invention relates to a unit for cutting, along predetermined lines, sheets of glass in general, and sheets of laminated glass in particular.

In Italian Patents IT-B-1241281 and IT-B-1245458 (equivalent to EP-A-0 503 647) - sheets of laminated glass, e.g. comprising two outer sheets of glass and an intermediate sheet of synthetic material, are cut using machines comprising two cutting wheels located, in use, on either side of the laminated sheet, and a pressure wheel located behind or in front of one of the cutting wheels along the cutting line, and which provides for breaking off one of the glass sheets. Known machines also comprise a rocking pressure element for pressing the sheet against a supporting surface and breaking off the other glass sheet; and a separating device for parting the portions of the sheet once the sheet of synthetic material has been heated by means of a resistor.

On known machines, the cutting and pressure wheels, the rocking pressure element and the separating device are operated by respective pneumatic actuators connected to a compressed air line by respective pressure reducers with respective gauges; and each reducer is regulated manually by an operator, who, as a function of the thickness of each glass sheet and the type and thickness of the sheet of synthetic material, adjusts the knobs on the reducers to so regulate the air supply pressure to the actuators - and, consequently, the pressure exerted by the wheels and the rocking element, and separation of the cut portions of the sheet - as to obtain a precise cut of the glass sheets, and a clean cut, with no ragged edges or slivers, of the glass sheets and the sheet of synthetic material.

On known machines of the above type, correct cutting, i.e. to the ideal depth, by the cutting wheels, optimum breakoff of the cut glass sheets, and optimum cutting of the intermediate sheet therefore depend exclusively on the skill and experience of the operator, who first selects and manually sets the most appropriate pressure values as a function of the different thicknesses of the glass sheets and the sheet of synthetic material, and of the type of synthetic material used.

In many cases, the pressure settings are further complicated by variations in temperature, and hence the physical characteristics, of the sheets, as when the sheets are transferred from storage to the machine, in which case, the skill and experience of the operator are vital in adjusting the air supply pressure to the actuators, and hence the pressures exerted on the laminated sheet, to allow for a possible change in temperature. This is why known cutting machines fail to provide for successively producing consistently high quality products of similar or different shape and form.

It is an object of the present invention to provide a unit for cutting sheets of glass, designed to eliminate the aforementioned drawbacks.

According to the present invention, there is provided a unit for cutting sheets of glass along predetermined lines, the unit comprising cutting means for making in each sheet at least one cut along a cutting line; pressure means acting on the sheet to break the sheet along said cutting line into two sheet portions; separating means for separating said two portions; actuating means for activating said cutting, pressure and separating means; and control and operating means for controlling and operating said actuating means; characterized in that said control and operating means comprise proportional valve means; an electronic central unit for controlling said proportional valve means; and input signal transmitting means for transmitting input signals and connected to said central unit; the central unit comprising control means for emitting control signals to at least said proportional valve means in response to said input signals.

A non-limiting embodiment of the present invention will be described by way of example with reference to the accompanying drawings, in which:
Figures 1 and 2 show two schematic side views, partially in cross section, of a unit for cutting sheets of glass in accordance with the present invention;
Figure 3 shows a partial larger-scale view of a detail in Figure 1;
Figure 4 shows, schematically and substantially in block form, an assembly for controlling some of the components in Figures 1 and 2.

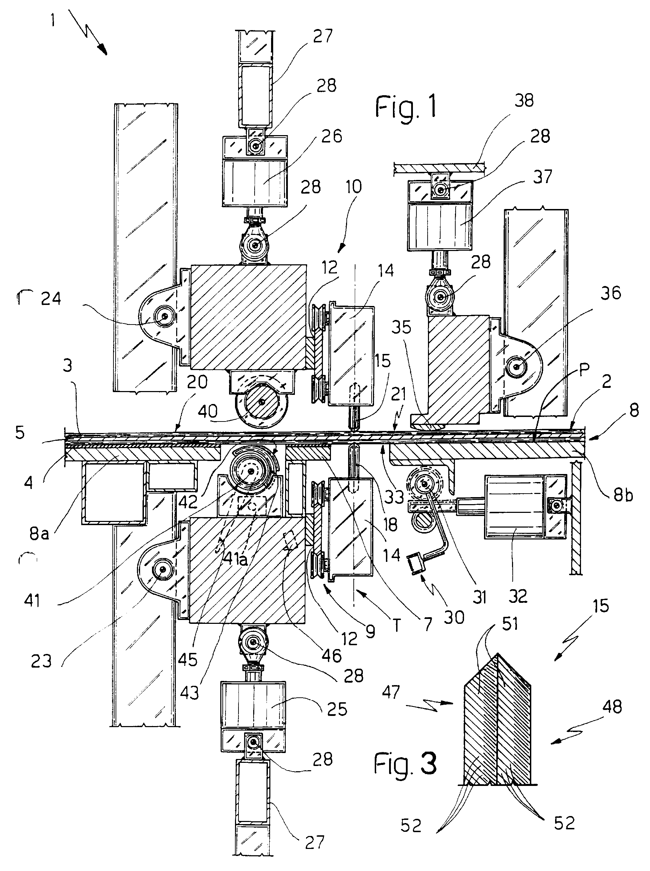

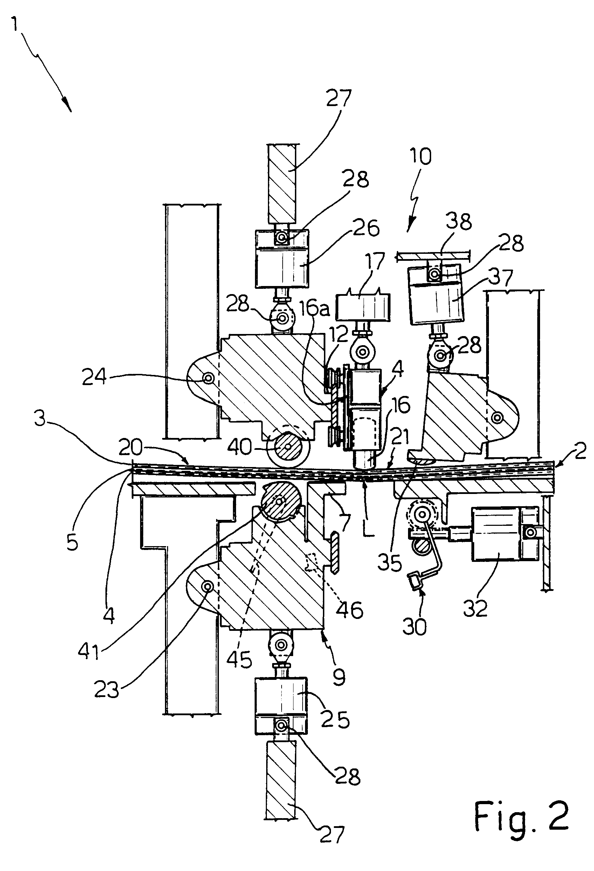

Number 1 in Figures 1 and 2 indicates as a whole a unit for cutting along predetermined lines a sheet 2 of laminated glass comprising, for example, a top sheet 3 of glass, a bottom sheet 4 of glass, and an intermediate sheet 5 of synthetic plastic material, conveniently polyvinylbutyral, bonded between glass sheets 3 and 4. Unit 1 comprises side by side, coplanar tables 7 and 8 defining a supporting surface P for sheet 2; a bottom cutting bridge 9 located beneath surface P defined by tables 7 and 8, and connected in known manner (not shown for the sake of simplicity) to a supporting frame so as to move parallel to surface P; and a top cutting bridge 10 located over surface P and connected in known manner (not shown for the sake of simplicity) to a respective supporting frame so as to move parallel to surface P. Each bridge 9, 10 comprises a respective guide 12 crosswise to sheet 2 and along which travels a respective known powered carriage 14.

Carriage 14 of top bridge 10 comprises in known manner a disk cutter or cutting wheel 15 rotating about an axis substantially perpendicular to guide 12 and parallel to surface P defined by tables 7 and 8; and a known pressure wheel 16 (Figure 2) in tandem with, i.e. behind or in front of, wheel 15, and which is connected to a slide 16a (shown partly in Figure 2) so as to rotate about an axis parallel to that of wheel 15. Slide 16a is connected to respective carriage 14 so as to travel to and from sheet 2, and is moved towards sheet 2 by a respective known pneumatic actuator 17. Carriage 14 of bottom bridge 9, on the other hand, comprises in known manner only a cutting wheel 18 defined by a disk cutter similar to and aligned with wheel 15, and rotating about an axis parallel to that of wheel 15. Wheels 15, 16, 18 are therefore all located along an ideal cutting line L, the location of which is indicated in Figure 1 by an axis T, and which is substantially parallel to guides 12 but not necessarily straight. In fact, the location and form of cutting line L, along which sheet 2 is cut into two portions 20, 21 on either side of the cutting line (respectively to the left and right of cutting line L in the Figure 1 example), may be predetermined by unit 1 in known manner by appropriately (even simultaneously) moving carriages 14 along guides 12 and moving bridges 9, 10 parallel to surface P defined by tables 7 and 8.

According to the invention, table 7 is located between two spaced portions 8a and 8b of table 8, and is connected integrally to bottom bridge 9; bottom bridge 9 and top bridge 10 are mounted so as to rock, with respect to the supporting surface P of sheet 2 defined by table 8, about respective axes parallel to guides 12 and defined by respective hinges 23, 24, and are connected in articulated manner to respective, conveniently pneumatic, linear actuators 25, 26, by which they are rotated about axes 23, 24; and actuators 25, 26 are connected, for example, to bridges 9, 10 and to respective supporting frames 27 by respective hinges 28.

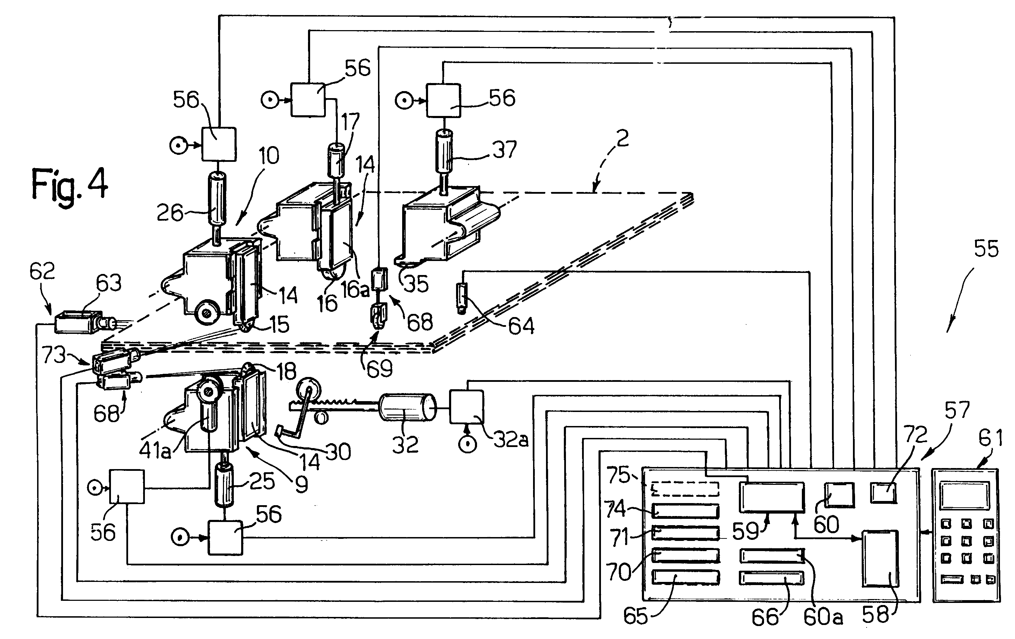

According to the invention, unit 1 also comprises a known heating resistor 30 for thermally cutting sheet 5 of synthetic material, and which is fitted in rocking manner to the underside of portion 8b so as to rotate, for example, about an axis 31, and is controlled by a pneumatic actuator 32 acting on a rack and pinion assembly and in turn controlled by a known valve 32a (Figure 4). Portion 8b is positioned facing bottom bridge 9 and top bridge 10, so that resistor 30 is movable, in use, by actuator 32 between a withdrawn rest position (Figure 1) beneath portion 8b, and a forward operating position in which resistor 30 is inserted inside a gap 33 defined between portion 8b and table 7.

Over portion 8b, unit 1 comprises a pressure element 35 rocking about an axis 36 defined by a hinge and parallel to the supporting surface defined by tables 7 and 8, and the rotation of which about hinge 36 is controlled by a known pneumatic actuator 37 similar, for example to actuators 25, 26 and, like actuators 25, 26, connected in articulated manner to element 35 and to a support 38 by respective hinges 28.

In addition to supporting carriage 14 with cutting wheel 15 and pressure wheel 16, top bridge 10 also comprises, parallel to guides 12, an idle pressure roller 40 rotating about an axis parallel to axes 23, 24; and bottom bridge 9 comprises a roller 41 located opposite roller 40 and beneath the supporting surface defined by tables 7, 8, and which is rotated about an axis parallel to axes 23, 24 by a respective known pneumatic actuator 41a. Roller 41 is located to the side of table 7, in a gap defined between table 7 and portion 8a of table 8, and comprises an eccentric cam-shaped circumferential profile 42, so that, as roller 41 rotates, a portion 43 of roller 41 moves over the supporting surface defined by table 7, 8 and into contact with sheet 2. The powered roller 41 also comprises a radial arm 45 for controlling a known limit switch 46.

Figure 3 shows a larger-scale detail of cutting wheel 15 fitted to carriage 14. According to a preferred embodiment of the invention, cutting wheel 15 is divided, with respect to a plane through the center of and perpendicular to the axis of rotation of wheel 15, into two symmetrical truncated-cone-shaped portions 47 and 48 adjacent to each other along the respective longer sides.

Both portions 47 and 48 comprise respective lateral surfaces 51 with a number of parallel, equally spaced grooves/ridges 52 slanting with respect to the axis of rotation of wheel 15; and the grooves 52 of one portion, e.g. portion 48, of wheel 15 are offset half a space with respect to the grooves of portion 47.

As shown in Figure 4, unit 1 comprises a control assembly 55 for controlling actuators 17, 25, 26, 32, 37 and 41a. More specifically, assembly 55 comprises a number of known proportional valves 56, each connected to a respective pneumatic actuator 17, 25, 26, 37, 41a; and an electronic central unit 57 for controlling proportional valves 56, and in turn comprising a memory 58 for storing a number of operating programs, a data processing and control assembly or circuit 59, a selection circuit 60 interposed between circuit 59 and memory 58 to select one of the memorized operating programs as a function of external data supplied to central unit 57 as described later on, and a control block or circuit 60a for controlling valves 56 and 32a.

Assembly 55 also comprises a keyboard 61, which, in a first embodiment, dialogs with processing circuit 59 and is used by the operator to supply processing circuit 59 with information or data including the thickness of glass sheets 3, 4 and sheet 5, and the temperature of sheet 2 on table 8. In an alternative embodiment, keyboard 61 is connected directly to selection circuit 60, and is used by the operator to directly select one of the programs memorized according to the thickness of sheets 3, 4, 5 and possibly also the temperature of sheet 2.

Parallel with or in lieu of keyboard 61, assembly 55 also comprises a conveniently optical or optoelectronic detecting device 62 for automatically detecting the thickness of sheets 3, 4, 5, and which preferably comprises a telecamera 63. Device 62 provides for generating and transmitting dimension signals to processing circuit 59, which, in response, selects one of the operating programs by which to subsequently control proportional valves 56 and valve 32a.

As shown in Figure 4, parallel with or in lieu of keyboard 61, assembly 55 also comprises a temperature sensor 64, conveniently a pyrometer, located close to sheet 2 for detecting the temperature of sheet 2 and supplying central unit 57 with a temperature signal proportional to the detected temperature. Central unit 57 in turn comprises a comparing circuit or block 65 for receiving the temperature signal from sensor 64 and comparing it with a predetermined reference value; and a first control block or circuit 66 for varying and/or correcting the control signals supplied by block 60a to valves 56 and 32a, and which is enabled by comparing circuit 65 in the event of a predetermined relationship between the temperature signal and said reference value.

As shown in Figure 4, assembly 55 also comprises a device 68 for detecting and indicating wear of cutting wheels 15, 18, and which is also connected to central unit 57. In the embodiment shown, device 68 comprises a travel detector 69 (shown schematically) for detecting the length of the cuts made in sheet 2, and for supplying central unit 57 with a signal indicating the travel of cutting wheels 15, 18. Travel detector 69 may be defined by a straightforward wheel contacting sheet 2, or, conveniently, by a pulse generator associated with the operating system of carriages 14 and 15. Central unit 57 in turn comprises a further comparing circuit 70 for receiving the travel signal emitted by detector 69 and comparing it with a predetermined reference value; and a further processing and control circuit 71, which provides for activating a luminous or acoustic wear indicating device 72 and/or varying the control signals from block 60a in proportion to the amount of wear detected, and which is enabled by comparing circuit 70 in the event of a predetermined relationship between the wear signal and said reference value.

Parallel with or in lieu of travel detector 69, device 68 comprises a pair of telecameras 73, each for detecting the shape of the cutting edge (Figure 3) or the diameter of a respective cutting wheel 15, 18. Each telecamera 73 is connected to and supplies central unit 57 with a respective wear signal, which, if the diameter of the cutting wheel is being monitored, is processed practically in the same way as the signal supplied by travel detector 69. Conversely, in the event telecamera 73 provides for monitoring the shape of the cutting edge, central unit 57 also comprises a comparing circuit or block 74 for receiving the signal from telecamera 73 and comparing it with a predetermined reference map; and a further processing and control circuit 75, which provides for activating indicating device 72 and/or varying the control signals from block 60a in proportion to the amount of wear detected, and which is enabled by comparing circuit 74 in the event of a predetermined relationship between the wear signal and the reference map, e.g. in the event the cutting edge crosses a predetermined lower threshold profile.

In actual use, sheet 2 on tables 7 and 8 is cut in a sequence of operations, and more specifically the sequence described in Italian Patents IT-B-1241281 and IT-B-1245458 mentioned above.

In the interim between positioning sheet 2 on supporting surface P and performing the above cutting operations, unit 1 is set up according to the characteristics of sheet 2 and the cutting conditions; and, during cutting, unit 1 is controlled and adjusted continually alongside variations in cutting conditions and, in particular, in the degree of wear of cutting wheels 15 and 18.

Unit 1 described may be set up partly manually or fully automatically. In partly manual setup mode, the operator first determines the characteristics of sheet 2, i.e. the thickness of glass sheets 3 and 4 and sheet 5 of synthetic material, and the temperature of sheet 2, and, by means of keyboard 61, supplies this information to processing circuit 59, which, in response and by means of selection circuit 60, selects one of the memorized programs from memory 58. Alternatively, given the thickness of sheets 3, 4, 5 and possibly also the temperature of sheet 2, the operator, again using keyboard 61, operates directly on selection circuit 60 to select one of the memorized programs from memory 58.

At this point, following the selected program, central unit 57 supplies proportional valves 56 and valve 32a with a number of control signals resulting in precise supply pressures and, hence, corresponding displacements of actuators 17, 25, 26, 32, 37 and 41a.

In fully automatic setup mode, once sheet 2 is deposited on supporting surface P, device 62 and sensor 64 respectively determine the thickness of the component layers and the temperature of sheet 2, and supply central unit 57 with respective signals, which are processed as described above by the various components of central unit 57, which in turn transmits a control signal to each of valves 56 and valve 32a. The same process is repeated whenever a sheet 2 is deposited on supporting surface P.

Throughout the cutting stage, device 68 transmits signals to central unit 57, which, upon one or both of wheels 15 and 18 reaching a given degree of wear, enables indicating device 72 and/or varies the control signals to valves 56 to compensate for partial wear of the cutting wheels and so maintain a substantially consistent quality of the products obtained from sheet 2.

Control assembly 55 of unit 1 described, and in particular proportional valves 56 and central unit 57 for controlling valves 56, therefore provides for performing the various cutting operations in the best possible conditions at all times, and so obtaining products of the same quality standard, regardless of the characteristics of the sheet or the cutting conditions. In other words, central unit 57 of unit 1 described controls proportional valves 56 on the basis of specific operating programs selected in each case by central unit 57 as a function not only of the characteristics but also of the temperature of sheet 2. As such, unlike known machines, the pressure exerted by wheels 15, 16, 18 of unit 1 described, and hence the cutting precision and optimum breakoff pressure of glass sheets 3 and 4, are determined, not arbitrarily or according to the skill and experience of the operator, but by an electronic assembly capable of selecting the best cutting parameters in each individual case. Unit 1 therefore requires no skilled labour, in that the operator, if any, is merely called upon to supply the central unit with straightforward data or information which, alternatively, may even be acquired by device 62 and temperature sensor 64. Similarly, device 68 for detecting the wear of cutting wheels 15, 18 safeguards against insufficient and/or abnormal cutting of the sheet, by virtue of telecameras 73 determining not only the overall wear but also any breakages or localized wear of wheels 15, 18, and eliminates the need for constant direct control of the unit by the operator, who therefore practically only intervenes when indicating device 72 is activated.

Clearly, changes may be made to unit 1 as described and illustrated herein without, however, departing from the scope of the present invention as defined by the claims. In particular, devices 62, 68 and sensor 64 may be replaced by devices other than or operating differently from those described by way of example; and central unit 57 itself may be other than as described by way of example, and may operate differently from that described to adapt, for example, to different devices 62 or 68.

Unit 1 may also obviously be modified for cutting not only sheets of laminated glass, but also sheets of glass partly covered with one or more cover layers, or plain sheets of glass of, obviously, any thickness.

## Claims

1. A unit (1) for cutting sheets (2) of glass along predetermined lines, the unit comprising cutting means (15)(18) for making in each sheet (2) at least one cut along a cutting line (L); pressure means (16)(35) acting on the sheet (2) to break the sheet (2) along said cutting line (L) into two sheet portions (20)(21); separating means (40, 41) for separating said two portions (20)(21); actuating means (25)(26)(17)(37))41a) for activating said cutting (15)(18), pressure (16)(35) and separating (40, 41) means; and control and operating means for controlling and operating said actuating means (25)(26)(17)(37)(41a); characterized in that said control and operating means comprise proportional valve means (56); an electronic central unit (57) for controlling said proportional valve means (56); and input signal transmitting means (61)(62)(64)(68) for transmitting input signals and connected to said central unit (57); the central unit (57) comprising control means (60a) for emitting control signals to at least said proportional valve means (56) in response to said input signals.

2. A unit as claimed in Claim 1, characterized in that said central unit (57) also comprises memory means (58) for memorizing a number of operating programs, and selecting means (60) for selecting said memorized programs; said input signal transmitting means (61 (62)(64)(68) comprising first keyboard means (61) connected to said selecting means (60) and by which said programs memorized in said memory means (58) may be selected directly and externally by an operator.

3. A unit as claimed in Claim 1 or 2, characterized in that said central unit (57) comprises memory means (58) for memorizing a number of operating programs, and selecting means (60) for selecting said memorized programs; said input signal transmitting means (61)(62)(64)(68) comprising second keyboard means (61) used by the operator to supply the central unit (57) with a number of instruction signals for instructing the central unit (57); and said central unit (57) also comprising a data processing and control unit (59) interposed between said second keyboard means (61) and said selecting means (60) to process the received instruction signals and accordingly control said selecting means (60).

4. A unit as claimed in any one of the foregoing Claims, characterized in that said central unit (57) comprises memory means (58) for memorizing a number of operating programs, and selecting means (60) for selecting said memorized programs; said input signal transmitting means (61)(62)(64)(68) comprising first detecting means (62) for detecting at least one dimensional characteristic of said sheet (2) and emitting a respective dimension signal; and said central unit (57) comprising a processing and control unit (59) for receiving said dimension signal and generating, in response, a control signal for controlling said selecting means (60).

5. A unit as claimed in Claim 4, characterized in that said first detecting means (62) are optoelectronic detecting means.

6. A unit as claimed in any one of the foregoing Claims, characterized in that said input signal transmitting means (61)(62)(64)(68) also comprise sensor means (64) for detecting a temperature of said sheet (2) and supplying said central unit (57) with a temperature signal; said central unit (57) comprising first comparing means (65) for receiving said temperature signal and comparing said temperature signal with a first reference value, and first control means (66) which, in use, vary the control signals sent by said control means (60a) and are enabled by said first comparing means (65) in the event of a first predetermined relationship between said temperature signal and said first reference value.

7. A unit as claimed in any one of the foregoing Claims, characterized in that said input signal transmitting means (61)(62)(64)(68) also comprise second detecting means (68) for detecting a wear condition of said cutting means (15)(18) and supplying said central unit (57) with a wear signal; indicating means (72) being activated by said central unit (57) in response to said wear signal to indicate said wear condition.

8. A unit as claimed in Claim 7, characterized in that said central unit (57) comprises second comparing means (70) for receiving said wear signal and comparing said wear signal with a predetermined second reference value; and second control means (71) for activating said indicating means (72), and which are enabled by said second comparing means (70) in the event of a second predetermined relationship between said wear signal and said second reference value.

9. A unit as claimed in Claim 7 or 8, characterized in that said second detecting means (68) comprise a travel detecting device (69) for determining a length of said cut.

10. A unit as claimed in Claim 7 or 8, characterized in that said second detecting means (68) comprise a further detecting device (73) for determining a significant dimension of said cutting means (15)(18).

11. A unit as claimed in Claim 7, characterized in that said central unit (57) comprises third comparing means (74) for receiving said wear signal and comparing said wear signal with a geometric reference map; and third control means (75) for activating said indicating means (72), and which are enabled by said third comparing means (74) in the event of a third predetermined relationship between said wear signal and said geometric reference map.

12. A unit as claimed in one of the foregoing Claims from 7 to 11, characterized in that said central unit (57) also comprises further processing and control means (71; 75) for processing the wear signals sent to the central unit (57), for varying the control signals supplied by said control means (60a), and which are enabled by said wear signal comparing means (70, 74) in the event of a further predetermined relationship between said wear signal and said geometric reference map.

13. A unit as claimed in one of the foregoing Claims from 10 to 12, characterized in that said second detecting means (73) are optoelectronic detecting means.

14. A unit as claimed in any one of the foregoing Claims, characterized in that said sheet (2) is a sheet of laminated glass, and comprises a first (3) and a second (4) sheet of glass and a sheet (5) of synthetic material interposed between the first and second sheets (3)(4); said cutting (15)(18) and pressure (16) means comprising, for each of said first (3) and second (4) sheets, a respective cutting assembly (15, 26, 56) (18, 25, 56) for making a said cut in the respective sheet (3)(4) of glass, and a respective pressure assembly (17, 16, 56) (35, 37, 56) for dividing said first (3) and second (4) sheets of glass into two respective portions; a separating assembly (40)(41) being provided for separating said two portions of the same sheet (3)(4) of glass; and each said cutting assembly (15, 26, 56) (18, 25, 56), forcing assembly (17, 16, 56) (35, 37, 56) and separating assembly (40) (41) comprising respective proportional valve means (56) controlled by said electronic central unit (57).

## Patentansprüche

1. Vorrichtung (1) zum Schneiden von Glasscheiben (2) entlang vorbestimmter Bahnen, wobei die Vorrichtung Schneidemittel (15, 18) zum Anbringen wenigstens eines Schnittes entlang einer Schneidebahn (L) in jede Scheibe (2), auf die Scheibe (2) einwirkende Druckmittel (16) (35) zum Brechen der Scheibe (2) entlang der besagten Schneidebahn (L) in zwei Scheibenbereiche (20) (21), Trennmittel (40, 41) zum Trennen der zwei Bereiche (20) (21), Antriebsmittel (25) (26) (17) (37) (41a) zum Antreiben des Schneidens (15) (18), Druck- (16) (35) und Trennmittel (40, 41) sowie Steuerungs- und Bedienungsmittel zum Steuern und Bedienen der Antriebsmittel (25) (26) (17) (37) (41a) aufweist, **dadurch gekennzeichnet**, daß die Steuerungs- und Bedienungsmittel proportionale Ventilmittel (56), eine elektronische Zentraleinheit (57) zum Steuern der proportionalen Ventilmittel (56) und mit der Zentraleinheit (57) verbundene Eingangssignalübertragungsmittel (61) (62) (64) (68) zum Übertragen von Eingangssignalen umfassen, wobei die Zentraleinheit (57) über Steuerungsmittel (60a) zum Aussenden von Steuerungssignalen wenigstens an die proportionalen Ventilmittel (56) als Folge der Eingangssignale verfügt.

2. Vorrichtung gemäß Anspruch 1, dadurch gekennzeichnet, daß die Zentraleinheit (57) weiterhin Speichermittel (58) zum Speichern einer Anzahl von Betriebsprogrammen und Auswahlmittel (60) zum Auswählen der gespeicherten Programme aufweist, wobei die Eingangssignalübertragungsmittel (61) (62) (64) (68) erste Tastaturmittel (61) umfassen, die mit den Auswahlmitteln (60) verbunden sind und durch die die in den Speichermitteln (58) gespeicherten Programme direkt und extern durch einen Bediener auswählbar sind.

3. Vorrichtung gemäß Anspruch 1 oder 2, dadurch gekennzeichnet daß die Zentraleinheit (57) Spreichermittel (58) zum Speichern einer Anzahl von Betriebsprogrammen und Auswahlmittel (60) zum Auswählen der gespeicherten Programme umfaßt, wobei die Eingangssignalübertragungsmittel (61) (62) (64) (68) zweite Tastaturmittel (61) aufweisen, die von dem Bediener verwendbar sind, um die Zentraleinheit (57) mit einer Anzahl von Anweisungssignalen zum Anweisen der Zentraleinheit (57) zu versorgen, wobei die Zentraleinheit (57) weiterhin eine Datenverarbeitungs- und Steuerungseinheit (59) aufweist, die zwischen den besagten zweiten Tastaturmittel (61) und den Auswahlmitteln (60) angeordnet sind, um die einzelnen Anweisungssignale weiterzuleiten und die Auswahlmittel (60) dementsprechend zu steuern.

4. Vorrichtung gemäß einem der vorhergehenden Ansprüche, dadurch gekennzeichnet, daß die Zentraleinheit (57) Speichermittel (58) zum Speichern einer Anzahl von Betriebsprogrammen und Auswahlmittel (60) zum Auswählen der gespeicherten Programme aufweist, wobei die Eingangssignalübertragungsmittel (61) (62) (64) (68) erste Meßmittel (62) zum Messen wenigstens einer Dimensionsgröße der besagten Scheibe (2) und zum Senden eines zugeordneten Dimensionssignals umfassen und wobei die Zentraleinheit (57) eine Verarbeitungs- und Steuerungseinheit (59) zum Empfangen des Dimensionssignals und zum Erzeugen eines Steuerungssignals als Antwort umfaßt, um die Auswahlmittel (60) zu steuern.

5. Vorrichtung gemäß Anspruch 4, dadurch gekennzeichnet, daß die Meßmittel (62) optoelektronische Meßmittel sind.

6. Vorrichtung gemäß einem der vorherigen Ansprüche, dadurch gekennzeichnet, daß die Eingangssignaleübertragungsmittel (61) (62) (64) (68) ebenso Fühlermittel (64) zum Messen der Temperatur der Scheibe (2) und zum Versorgen der Zentraleinheit (57) mit einem Temperatursignal aufweisen, wobei die Zentraleinheit (57) erste Vergleichsmittel (65) zum Empfang des Temperatursignals und zum Vergleichen des Temperatursignals mit einem ersten Referenzwert und erste Steuerungsmittel (66) aufweist, die bei Gebrauch die von den Steuerungsmitteln (60a) gesendeten Steuerungssignale variieren und im Falle einer ersten vorbestimmten Beziehung zwischen dem Temperatursignal und dem ersten Referenzwert durch die ersten Vergleichsmitteln (65) aktivierbar sind.

7. Vorrichtung nach einem der vorhergehenden Ansprüche, dadurch gekennzeichnet, daß die Eingangssignalübertragungsmittel (61) (62) (64) (68) weiterhin zweite Meßmittel (68) zum Messen des Abnutzungsgrades der Schneidemittel (15) (18) und zum Versorgen der Zentraleinheit (57) mit einem Abnutzungssignal und durch die Zentraleinheit (57) als Folge eines Abnutzungssignals aktivierbare Anzeigemittel (72) zum Anzeigen des Abnutzungsgrades umfassen.

8. Vorrichtung gemäß Anspruch 7, dadurch gekennzeichnet, daß die Zentraleinheit (57) zweite Vergleichsmittel (70) zum Empfangen des Abnutzungssignals und zum Vergleichen des Abnutzungssignals mit einem vorbestimmten zweiten Referenzwert und zweite Steuerungsmittel (71) zum Aktivieren der Anzeigemittel (72) umfaßt, die durch die zweiten Vergleichsmittel (70) bei Eintritt einer zweiten vorbestimmten Beziehung zwischen dem Abnutzungssignal und dem zweiten Referenzwert aktivierbar sind.

9. Vorrichtung gemäß Anspruch 7 oder 8, dadurch gekennzeichnet, daß die zweiten Meßmittel (68) eine Wegmeßeinheit (69) zum Bestimmen der Länge des Schnittes umfassen.

10. Vorrichtung nach Anspruch 7 oder 8, dadurch gekennzeichnet, daß die zweiten Meßmittel (68) weiterhin ein Meßmittel (73) zum Bestimmen einer signifikanten Ausmaße der Schneidemittel (15) (18) umfassen.

11. Vorrichtung gemäß Anspruch 7, dadurch gekennzeichnet, daß die Zentraleinheit (57) dritte Vergleichsmittel (74) zum Empfangen des Abnutzungssignals und zum Vergleichen des Abnutzungssignals mit einer geometrischen Referenzkarte und dritte Steuerungsmittel (75) zum Aktivieren der Anzeigemittel (72) umfaßt, die durch die dritten Vergleichsmittel bei Eintritt einer dritten vorbestimmten Beziehung zwischen dem Abnutzungssignal und der geometrischen Referenzkarte aktivierbar ist.

12. Vorrichtung gemäß einem der vorhergehenden Ansprüche 7 bis 11, dadurch gekennzeichnet, daß die Zentraleinheit (57) weiterhin Verarbeitungs- und Steuerungsmittel (71, 75) zum Verarbeiten des an die Zentraleinheit (57) gesendeten Abnutzungssignals und zum Variieren der von den Steuerungsmitteln (60a) gesendeten Steuerungssignale umfaßt, die bei Eintritt einer weiteren vorbestimmten Beziehung zwischen dem Abnutzungssignal und der geometrischen Referenzkarte durch die Abnutzungssignalvergleichsmittel (70, 74) aktivierbar sind.

13. Vorrichtung gemäß einem der vorhergehenden Ansprüche 10 bis 12, dadurch gekennzeichnet, daß die zweiten Meßmittel (73) optoelektronische Meßmittel sind.

14. Vorrichtung gemäß einem der vorhergehenden Ansprüche, dadurch gekennzeichnet, daß die Scheibe (2) eine Scheibe aus geschichtetem Glas ist und eine erste (3) und eine zweite Glasscheibe (4) sowie eine Scheibe (5) aus synthetischem Material umfaßt, die zwischen der ersten und zweiten Scheibe (3) (4) angeordnet ist, wobei die Schneide- (15) (18) und Druckmittel (16) für jede der ersten (3) und zweiten (4) Glasscheiben eine zugeordnete Schneideeinrichtung (15, 26, 56) (18, 25, 56) zum Anbringen eines Schnittes in die jeweilige Glasscheibe (3) (4) und eine zugeordnete Druckeinrichtung (17, 16, 56) (35, 37, 56) zum Teilen der ersten (3) und zweiten (4) Glasscheiben in zwei zugeordnete Bereiche sowie eine Trenneinrichtung (40) (41) zum Trennen der zwei Bereiche der gleichen Glasscheibe (3) (4) umfassen, wobei jede Schneideeinrichtung (15, 26, 56) (18, 25, 56), Krafteinrichtung (17, 16, 56) (35, 37, 56) und Trenneinrichtung (40) (41) zugeordnete proportionale Ventilmittel (56) umfaßt, die durch die elektronische Zentraleinheit (57) gesteuert sind. tionale Ventilmittel (56) umfaßt, die durch die elektronische Zentraleinheit (57) gesteuert sind.

## Revendications

1. Dispositif (1) pour la coupe de feuilles (2) de verre le long de lignes déterminées, comprenant des moyens de coupe (15)(18) pour faire dans chaque feuille (2) au moins une coupe le long d'une ligne de coupe (L), des moyens de pression (16)(35) qui agissent sur la feuille (2) pour la rompre en deux parties (20)(21) le long de ladite ligne de coupe (L), des moyens de séparation (40, 41) pour séparer lesdites deux parties (20)(21), des moyens d'actionnement (25)(26)(17)(37)(41a) pour activer lesdits moyens de coupe (15)(18), de pression (16)(35) et de séparation (40, 41), et des moyens de commande et de manoeuvre desdits moyens d'actionnement (25)(26)(17)(37)(41a), caractérisé par le fait que lesdits moyens de commande et de manoeuvre comprennent des vannes proportionnelles (56), un organe électronique central (57) pour commander lesdites vannes proportionnelles (56), et des moyens de transmission de signaux d'entrée (61)(62)(64)(68) reliés audit organe central (57) pour transmettre des signaux d'entrée, l'organe central (57) comprenant un moyen de commande (60a) pour envoyer des signaux de commande au moins auxdites vannes proportionnelles (56) en réponse auxdits signaux d'entrée.

2. Dispositif selon la revendication 1, caractérisé par le fait que ledit organe central (57) comprend aussi une mémoire (58) pour la mémorisation d'un certain nombre de programmes de fonctionnement et un moyen de sélection (60) pour la sélection desdits programmes mémorisés, et lesdits moyens de transmission de signaux d'entrée (61)(62)(64)(68) comprennent un premier moyen de clavier (61) relié audit moyen de sélection (60) et permettant la sélection directe et extérieure par un opérateur desdits programmes mémorisés dans ladite mémoire (58).

3. Dispositif selon l'une des revendications 1 et 2, caractérisé par le fait que ledit organe central (57) comprend une mémoire (58) pour la mémorisation d'un certain nombre de programmes de fonctionnement et un moyen de sélection (60) pour la sélection desdits programmes mémorisés, lesdits moyens de transmission de signaux d'entrée (61)(62)(64)(68) comprennent un deuxième moyen de clavier (61) que l'opérateur utilise pour envoyer à l'organe central (57) un certain nombre de signaux d'instruction de celui-ci, et ledit organe central (57) comprend aussi un organe de traitement de données et de commande (59) placé entre ledit deuxième moyen de clavier (61) et ledit moyen de sélection (60) pour traiter les signaux d'instruction reçus et commander en conséquence ledit moyen de sélection (60).

4. Dispositif selon l'une des revendications précédentes, caractérisé par le fait que ledit organe central (57) comprend une mémoire (58) pour la mémorisation d'un certain nombre de programmes de fonctionnement et un moyen de sélection (60) pour la sélection desdits programmes mémorisés, lesdits moyens de transmission de signaux d'entrée (61)(62)(64)(68) comprennent un premier moyen de détection (62) qui saisit au moins une caractéristique dimensionnelle de ladite feuille (2) et émet un signal respectif de dimension, et ledit organe central (57) comprend un organe de traitement et de commande (59) qui reçoit ledit signal de dimension et produit en réponse un signal de commande dudit moyen de sélection (60).

5. Dispositif selon la revendication 4, caractérisé par le fait que ledit premier moyen de détection (62) est un moyen de détection optoélectronique.

6. Dispositif selon l'une des revendications précédentes, caractérisé par le fait que lesdits moyens de transmission de signaux d'entrée (61)(62)(64)(68) comprennent aussi un capteur (64) qui saisit la température de la feuille (2) et envoie un signal de température audit organe central (57), et ledit organe central (57) comprend un premier moyen de comparaison (65) qui reçoit ledit signal de température et le compare à une première valeur de référence, et un premier moyen de commande (66) qui, en service, fait varier les signaux de commande envoyés par ledit moyen de commande (60a) et est validé par ledit premier moyen de comparaison (65) dans le cas d'une première relation déterminée entre ledit signal de température et ladite première valeur de référence.

7. Dispositif selon l'une des revendications précédentes, caractérisé par le fait que lesdits moyens de transmission de signaux d'entrée (61)(62)(64)(68) comprennent aussi un deuxième moyen de détection (68) qui détecte l'état d'usure desdits moyens de coupe (15)(18) et envoie un signal d'usure audit organe central (57), et un moyen d'indication (72) est activé par ledit organe central (57) en réponse audit signal d'usure pour indiquer ledit état d'usure.

8. Dispositif selon la revendication 7, caractérisé par le fait que ledit organe central (57) comprend un deuxième moyen de comparaison (70) qui reçoit ledit signal d'usure et le compare à une deuxième valeur de référence déterminée, et un deuxième moyen de commande (71) qui active ledit moyen d'indication (72) et est validé par ledit deuxième moyen de comparaison (70) dans le cas d'une deuxième relation déterminée entre ledit signal d'usure et ladite deuxième valeur de référence.

9. Dispositif selon l'une des revendications 7 et 8, caractérisé par le fait que ledit deuxième moyen de détection (68) comprend un dispositif détecteur de course (69) qui détermine la longueur de ladite coupe.

10. Dispositif selon l'une des revendications 7 et 8, caractérisé par le fait que ledit deuxième moyen de détection (68) comprend un autre dispositif détecteur (73) qui détermine une dimension significative desdits moyens de coupe (15)(18).

11. Dispositif selon la revendication 7, caractérisé par le fait que ledit organe central (57) comprend un troisième moyen de comparaison (74) qui reçoit ledit signal d'usure et le compare à une carte géométrique de référence, et un troisième moyen de commande (75) qui active ledit moyen d'indication (72) et est validé par ledit troisième moyen de comparaison (74) dans le cas d'une troisième relation déterminée entre ledit signal d'usure et ladite carte géométrique de référence.

12. Dispositif selon l'une des revendications précédentes 7 à 11, caractérisé par le fait que ledit organe central (57) comprend aussi un autre moyen de traitement et de commande (71 ; 75) qui traite les signaux d'usure envoyés à l'organe central (57) pour faire varier les signaux de commande envoyés par ledit moyen de commande (60a) et est validé par lesdits moyens de comparaison des signaux d'usure (70, 74) dans le cas d'une autre relation déterminée entre ledit signal d'usure et la carte géométrique de référence.

13. Dispositif selon l'une des revendications précédentes 10 à 12, caractérisé par le fait que ledit deuxième moyen de détection (73) est un moyen de détection optoélectronique.

14. Dispositif selon l'une des revendications précédentes, caractérisé par le fait que ladite feuille (2) est une feuille de verre feuilleté et comprend une première feuille de verre (3), une deuxième feuille de verre (4) et une feuille de matière synthétique (5) placée entre ces feuilles de verre (3)(4), lesdits moyens de coupe (15)(18) et de pression (16) comprennent, pour chacune desdites première et deuxième feuilles (3)(4), un ensemble de coupe respectif (15, 26, 56) (18, 25, 26) pour faire une dite coupe dans la feuille de verre respective (3)(4) et un ensemble presseur respectif (17, 16, 56) (35, 37, 56) pour diviser lesdites première et deuxième feuilles de verre (3)(4) en deux parties respectives, il est prévu un ensemble séparateur (40)(41) pour séparer lesdites deux parties de la même feuille de verre (3)(4), et chaque dit ensemble de coupe (15, 26, 56) (18, 25, 56), ensemble presseur (17, 16, 56) (35, 37, 56) et ensemble séparateur (40)(41) comprend une vanne proportionnelle respective (56) qui est commandée par ledit organe électronique central (57).
